# EUROPÄISCHE PATENTSCHRIFT

(11) **EP 1 398 283 B1**
(45) Veröffentlichungstag und Bekanntmachung des Hinweises auf die Patenterteilung: **30.05.2007**
(21) Anmeldenummer: 03019119.1
(22) Anmeldetag: 23.08.2003
(51) Int. Cl.: B65G 21/20, B65G 57/04

(54) **Transportvorrichtung für Gegenstände sowie Verfahren zum Halten oder Loslassen der Gegenstände**
Device for transporting objects and method for retaining or releasing the objets
Dispositif de transport d'objets et procédé de support où libération des objets

(30) Priorität: 13.09.2002 DE 10243300
(43) Veröffentlichungstag der Anmeldung: 17.03.2004
(73) Patentinhaber: LTG Mailänder GmbH, 70435 Stuttgart (DE)
(72) Erfinder: Gericke, Stephan, 73760 Ostfildern (DE)
(74) Vertreter: Grosse, Rainer

(56) Entgegenhaltungen:
- DE-A- 1 511 266

## Beschreibung

Die Erfindung betrifft eine Transportvorrichtung für Gegenstände, insbesondere Flachgüter, wie Blechtafeln und dergleichen, mit einer schaltbaren Unterdruckeinrichtung zum Halten der Güter, insbesondere in Überkopfposition, in einer Haltezone der Transportvorrichtung, und mit einem Schaltventil zum Auf- und Abbau des Unterdrucks. Ferner betrifft die Erfindung ein Verfahren gemäß Anspruch 11.

Bei der Bearbeitung von Blechtafeln werden diese mittels Transportvorrichtungen von Arbeitsstation zu Arbeitsstation transportiert. Nach Abschluss der Arbeiten werden die Blechtafeln in einem Stapelschacht aufeinander gestapelt. Es ist hierzu bekannt, die Blechtafeln in Überkopfposition mit Unterdruck an einem Vakuumtrum zu halten, bis ihr Lageziel oberhalb des Stapelschachtes erreicht ist. Durch Abschalten des Unterdrucks, das heißt Belüftung der Vakuumeinrichtung, wird die jeweilige Blechtafel freigegeben und fällt auf den Stapelort. Bei großen Blechtafelstückzahlen pro Zeiteinheit bilden die Vakuumaufbauzeiten und Belüftungszeiten Hemmnisse, die einer weiteren Beschleunigung des Prozesses entgegenstehen. Ferner entwickelt die Vakuumeinrichtung sehr laute Schaltgeräusche.

Aus der DE 1 511 266 A ist eine Transportvorrichtung für Gegenstände bekannt, die mehrere Unterdruckzonen aufweist, welche jeweils mit einem Schaltventil versehen sind, um in der jeweils von einem der Schaltventile versorgten Unterdruckzone einen Unterdruck zum Halten eines zu transportierenden Gegenstandes aufzubauen.

Der Erfindung liegt die Aufgabe zugrunde, eine Transportvorrichtung der Eingangs genannten Art zu schaffen, die bei einer hohen Stückzahlbewältigung niedrige Schalt-/Betriebsgeräusche aufweist.

Diese Aufgabe wird erfindungsgemäß dadurch gelöst, dass sich der Schaltquerschnitt des Schaltventils aus einer Vielzahl in Saug- beziehungsweise Belüftungsstellungen bringbaren, einer einzigen Vakuumkammer zugeordneten Einzelquerschnitten zusammensetzt, sodass zum Halten der Unterdruck über die Vielzahl von schaltbaren Einzelquerschnitten auf den Gegenstand einwirkt und zum Loslassen des Gegenstands eine oder die Vielzahl von schaltbaren Einzelquerschnitten belüftet werden. Diese Maßnahme ist völlig konträr zu dem bisherigen Einsatz von mit großen Querschnitten versehenen Tellerventilen, da die Vielzahl der Einzelquerschnitte eine ganz andere Ventilkonstruktion erfordert. Erfindungsgemäß wird das Vakuum mittels vieler Einzelquerschnitte geschaltet, die erst in der Summe einen entsprechend großen Querschnitt ergeben. Hierdurch treten so gut wie keine Resonanz-Räume auf, sodass aufgrund des erfindungsgemäßen Vorgehens sehr niedrige Schalt/Betriebsgeräusche entstehen. Die Einzelquerschnitte fördern die Geschwindigkeit des Aufbauprozesses des Vakuums beziehungsweise den Belüftungsvorgang, sodass sich hohe Stückzahlen pro Zeiteinheit handhaben lassen. Insbesondere kann vorgesehen sein, dass mindestens vier Einzelquerschnitte vorgesehen sind, die insgesamt den kompletten Querschnitt bilden. Es ist jedoch auch möglich, dass mehr als vier Einzelquerschnitte vorliegen, wobei die Zahl der Einzelquerschnitte bis auf den Wert 50 und auch noch darüber hinaus hochgehen kann, das heißt 50 Einzelquerschnitte bilden zusammen den Gesamtquerschnitt. Aufgrund der Erfindung ist es ohne weiteres möglich, circa 10.000 Blechtafeln pro Stunde abzuarbeiten. Bevorzugt kann vorgesehen sein, dass die Einzelquerschnitte gleichzeitig die Saug- beziehungsweise Belüftungsstellungen einnehmen. Hierdurch werden die per Unterdruck gehaltenen Güter über ihre Fläche verteilt, gleichmäßig angesaugt beziehungsweise freigegeben. Alternativ kann auch vorgesehen sein, dass die Einzelquerschnitte nicht gleichzeitig, sondern zeitlich versetzt voneinander in die Saug- beziehungsweise Belüftungsstellungen verbracht werden, sodass hierdurch die Wirkung des Ansaugvorgangs beziehungsweise des Abwurfvorgangs über die Fläche gesteuert werden kann. Dabei kann insbesondere vorgesehen sein, dass die Ansaugwirkung und/oder die Freigabewirkung fortschreitend über die Fläche der Gegenstände, insbesondere Blechtafeln, auftritt, quasi wie eine fortschreitende, wellenartige Aktion.

Das Schaltventil befindet sich bevorzugt in unmittelbarer Nähe der Haltezone, sodass beim Vakuumaufbau nur sehr kurze Strecken zurückgelegt werden müssen. Dies gilt auch für die Belüftung. Mithin muss die Luft für die Be- und Entlüftung der einzelnen Saugkanäle nur sehr kurze Strecken zurücklegen. Die Folge sind extrem kurze Schaltzeiten zum Auf- und Abbau des Vakuums.

Da die Einzelquerschnitte bevorzugt über die Haltezone verteilt angeordnet sind, werden die Gegenstände großflächig gehalten und insoweit sehr sicher transportiert. Ferner kann die jedem Einzelquerschnitt zugeordnete Saugkraft relativ klein gehalten werden, was wiederum zur Beschleunigung des Gesamtprozesses führt.

Nach einer Weiterbildung der Erfindung ist vorgesehen, dass das Schaltventil mindestens einen beweglichen Ventilkörper aufweist, der mittels eines Antriebs in die Saug- beziehungsweise in eine Belüftungsstellung bringbar ist. Bei diesem Antrieb kann es sich bevorzugt um einen pneumatischen, elektrischen und/oder magnetischen Antrieb handeln. Möglich ist beispielsweise auch ein mechanischer, mit Nocken versehener Antrieb, bei dem der Nocken bei jedem Umlauf eine Ventilsteuerung vornimmt. Entsprechend der Vielzahl der Einzelquerschnitte ist der Ventilkörper des Schaltventils von mehreren Saugkanälen durchsetzt. Die Zahl der Saugkanäle kann der Anzahl der Einzelquerschnitte entsprechen. Alternativ kann auch vorgesehen sein, dass einem Saugkanal mehr als ein Einzelquerschnitt zugeordnet ist. Entsprechendes gilt für die Anzahl der Entlüftungskanäle, die der Ventilkörper ebenfalls aufweist. Je nach Stellung des Ventilkörpers im Ventilgehäuse wird die Saugstellung beziehungsweise Belüftungsstellung des Schaltventils eingenommen.

Die Anordnung kann derart getroffen sein, dass die mindestens eine Vakuumkammer mit mehreren Wandungen vorgesehen ist, von denen mindestens eine das Schaltventil aufweist oder von denen mindestens eine von dem Schaltventil gebildet ist. Das Schaltventil selber liegt in unmittelbarer Nähe eines Transportmittels der Transportvorrichtung. Insbesondere grenzt das Schaltventil unmittelbar an das Transportmittel der Transportvorrichtung an. Hierdurch entstehen extrem kurze Saugstrecken.

Insbesondere kann vorgesehen sein, dass die das Transportmittel mindestens ein Lochriementrum ist. Vorzugsweise sind mehrere, parallel zueinander angeordnete Lochriementrums vorgesehen, das heißt, sie sind über das Breitenformat der Blechtafeln verteilt angeordnet.

Die Erfindung betrifft ferner ein Verfahren zum mittels Unterdruck erfolgenden Halten oder Loslassen von Gegenständen, insbesondere Flachgütern, wie Blechtafeln oder dergleichen, an einem Transportmittel, mit den Schritten: Vorsehen einer Transportvorrichtung wie vorstehend beschrieben, wobei zum Halten der Unterdruck einer einzigen Vakuumkammer über eine Vielzahl von schaltbaren Einzelquerschnitten auf den Gegenstand einwirkt und wobei zum Loslassen des Gegenstands eine oder die Vielzahl von schaltbaren Einzelquerschnitten belüftet werden.

Die Zeichnungen veranschaulichen die Erfindung anhand von Ausführungsbeispielen und zwar zeigt:
- Figur 1: eine Transportvorrichtung in schematischer Darstellung
- Figur 2: einen Abschnitt eines Schaltventils der Transportvorrichtung, in perspektivischer Ansicht schräg von unten sowie teilweise aufgeschnitten,
- Figur 3: eine Seitenansicht auf ein Schaltventil nach einem weiteren Ausführungsbeispiel, teilweise aufgeschnitten,
- Figur 4: eine Schaltstellung des Schaltventils der Figur 2 bei sich in Saugstellungen befindlichen Einzelquerschnitten,
- Figur 5: die andere Schaltstellung des Schaltventils mit sich in Belüftungsstellungen befindlichen Einzelquerschnitten,
- Figur 6: einen Abschnitt eines Schaltventils für eine Transportvorrichtung nach einem weiteren Ausführungsbeispiel, teilweise in Explosionsdarstellung,
- Figur 7: einen schematischen Querschnitt durch das Schaltventil der Figur 6 und
- Figur 8: ein weiteres Ausführungsbeispiel eines Schaltventils für eine Transportvorrichtung.

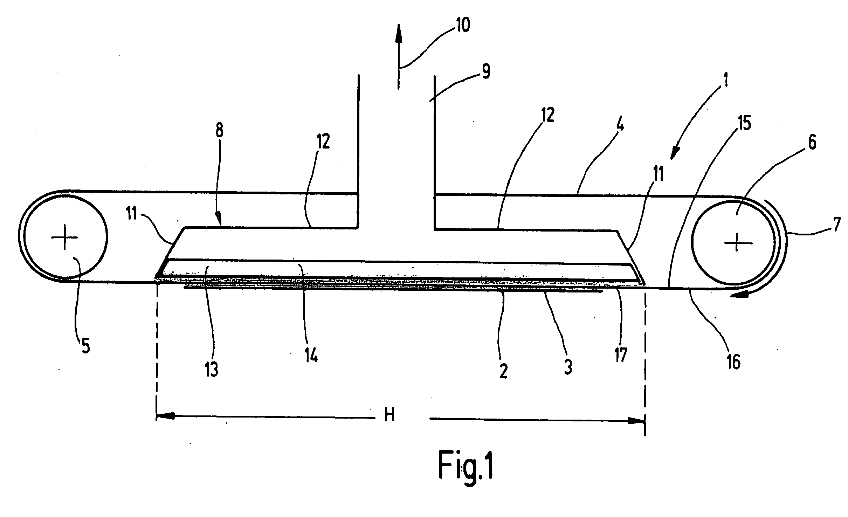

Die Figur 1 zeigt eine Transportvorrichtung 1, die für den Überkopftransport von Gegenständen 2, insbesondere Blechtafeln 3, geeignet ist.

Die Transportvorrichtung 1 weist mehrere, mit Abstand parallel zueinander liegende Lochriementrums 4 auf, wobei in der Figur 1 nur ein Lochriementrum 4 ersichtlich ist. Die anderen sind nicht erkennbar; sie liegen unterhalb der Zeichenebene. Jedes Lochriementrum 4 umschlingt als Endlosschleife zwei Umlenkräder 5, 6, die mittels einer nicht dargestellten Antriebseinrichtung angetrieben werden. Die Drehrichtung beziehungsweise Transportrichtung ist mit dem Pfeil 7 angedeutet. Zwischen Obertrum und Untertrum 16 des Lochriementrums 4 befindet sich eine Vakuumkammer 8, die mittels einer Vakuumleitung 9 an eine nicht dargestellte Vakuumseinrichtung angeschlossen ist. Mittels des Pfeiles 10 wird die Saugrichtung der Vakuumeinrichtung angedeutet. Die Vakuumkammer 8 kann sich über die gesamte Breite der Transportvorrichtung 1, also über sämtliche Riementrums 4 erstrecken. Vorzugsweise ist jedoch vorgesehen, dass jedem Riementrum 4 eine separate Vakuumkammer 8 mit entsprechender Vakuumleitung 9 zugeordnet ist, also nur über die Breite des jeweiligen Lochriemens ein Vakuum aufgebaut wird. Jede Vakuumkammer 8 besitzt Wandungen 11, 12 und 13, wobei die parallel zur Zeichenebene liegenden beiden Wandungen zur Bildung eines etwa quaderförmigen Hohlraums nicht dargestellt sind. Von Bedeutung ist, dass die Wandung 13 von einem Schaltventil 14 gebildet ist, das heißt, die der inneren Seite 15 des Untertrums 16 zugeordnete Wandung 13 der Vakuumkammer 8 ist als Schaltventil 14 ausgebildet, um - je nach Bedarf - aufgrund des Vakuums innerhalb der Vakuumkammer 8 auf der äußeren Seite 17 des Untertrums 16 ein Vakuum zum Überkopfhalten der Blechtafel 3 zu schaffen beziehungsweise - nach Schaltung des Schaltventils 14 - eine Belüftung derart vorzunehmen, dass kein Unterdruck mehr an der äußeren Seite 17 des Untertrums 16 wirkt und die Blechtafel 3 aufgrund der Schwerkraft beispielsweise zur Stapelung abgeworfen wird.

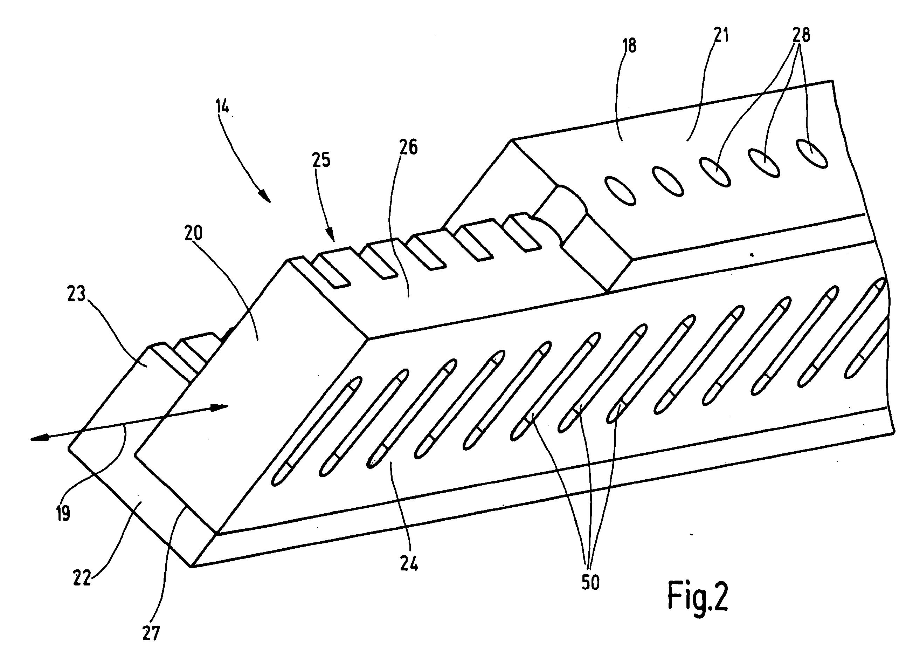

Die Blechtafel 3 wird mittels eines weiteren, nicht dargestellten Trums angeliefert und der Transportvorrichtung 1 übergeben, die den Transport bis in den Bereich einer Haltezone H vornimmt. Die Haltezone ist durch die Länge der Vakuumkammer 8 beziehungsweise den aktiven Querschnitt des Schaltventils 14 gekennzeichnet. Aus der Figur 2 geht der Aufbau der wesentlichen Baukomponenten des Schaltventils 14 näher hervor. Das Schaltventil 14 weist ein Ventilgehäuse 18 auf, in dem längsverschieblich gemäß Doppelpfeil 19 ein Ventilkörper 20 lagert. Das Ventilgehäuse 18 ist im Querschnitt U-förmig ausgestaltet. Es besitzt einen Schenkel 21, einen weiteren Schenkel 22 sowie einen die beiden Schenkel 21 und 22 verbindenden Mittelsteg 23. Die beiden Schenkel 21 und 22 verlaufen parallel zueinander; beide Schenkel 21 und 22 stehen rechtwinklig zum Mittelsteg 23. Im Innern des U's lagert der Ventilkörper 22, der quaderförmig gestaltet ist, wobei er eine Unterseite 24, eine Oberseite 25 und Längsseiten 26 und 27 aufweist. Die Querschnittsform und Abmessungen entsprechen dem Inneren des U-förmigen Ventilgehäuses 18, wobei die aneinandergrenzenden Seiten von Ventilkörper 20 und Ventilgehäuse 18 derart ausgestaltet sind, dass eine im Wesentlichen luftdichte Verbindung besteht, unabhängig davon, dass eine Bewegung der Teile relativ zueinander (Doppelpfeil 19) möglich ist. Selbstverständlich wird es aufgrund von Undichtigkeiten eine geringe Leckluft geben, die jedoch für die Idee der Erfindung keine Bedeutung hat und bei hochpräziser Fertigung vernachlässigt werden kann. In der Praxis ist es jedoch oftmals ausreichend, eine hinreichend präzise Fertigung vorzunehmen, da geringe Leckluftmengen keine Funktionsbeeinträchtigung bewirken.

Aus den Figuren 2 bis 5 ist ersichtlich, dass der Schenkel 21 des Ventilgehäuses 18 von reihenförmig angeordnet und beabstandet zueinander liegenden Entlüftungsbohrungen 28 durchsetzt wird. Ferner sind langlochartige Vakuumdurchbrüche 29 an dem Mittelsteg 23 vorgesehen, die ebenfalls beabstandet zueinander liegen und - entlang der Längserstreckung des Schaltventils 14 - reihenförmig angeordnet sind. Die Anordnung ist dabei derart getroffen, dass die Belüftungsbohrungen 28 versetzt - auf Lücke - zu den Vakuumdurchbrüchen 29 liegen. Der Versatz entspricht jeweils die Hälfte des Abstandes benachbarter Belüftungsbohrungen 28 beziehungsweise Vakuumdurchbrüche 29. Die Längserstreckung der langlochartigen Vakuumdurchbrüche 29 verläuft quer, insbesondere rechtwinklig zur Längserstreckung des Schaltventils 14. Der Ventilkörper 20 wird von einer Vielzahl von Saugkanälen 30 durchsetzt, die von der Unterseite 24 ausgehen und sich bis zur Oberseite 25 erstrecken. In dem Mittelsteg 23 zugewandten Bereich erweitert sich jeder Saugkanal 30 in einem Entlüftungskanal 31, der bis zum Schenkel 21 des Ventilgehäuses 18 reicht und derart ausgebildet ist, dass jeweils mit einer Belüftungsbohrung 28 in einer bestimmten Stellung des Ventilkörpers 20 korrespondieren kann. Die Anordnung der Vakuumdurchbrüche 29 beziehungsweise Saugkanäle 30 entspricht der Teilung der Lochreihe der Belüftungsbohrungen 28 beziehungsweise Vakuumdurchbrüche 29. Der Unterseite 24 des Ventilkörpers 20 ist ein mit dem Ventilgehäuse 18 feststehendes, also nicht mit dem Ventilkörper 20 bewegliches Lochblech 32 zugeordnet, das schräg zur Längserstreckung des Schaltventils 14 verlaufende Durchbrüche 33 aufweist. Die Durchbrüche 33 korrespondieren mit den Saugkanälen 30, unabhängig von der Stellung des Ventilkörpers 20, da der Schrägverlauf der Durchbrüche 33 vorgesehen ist.

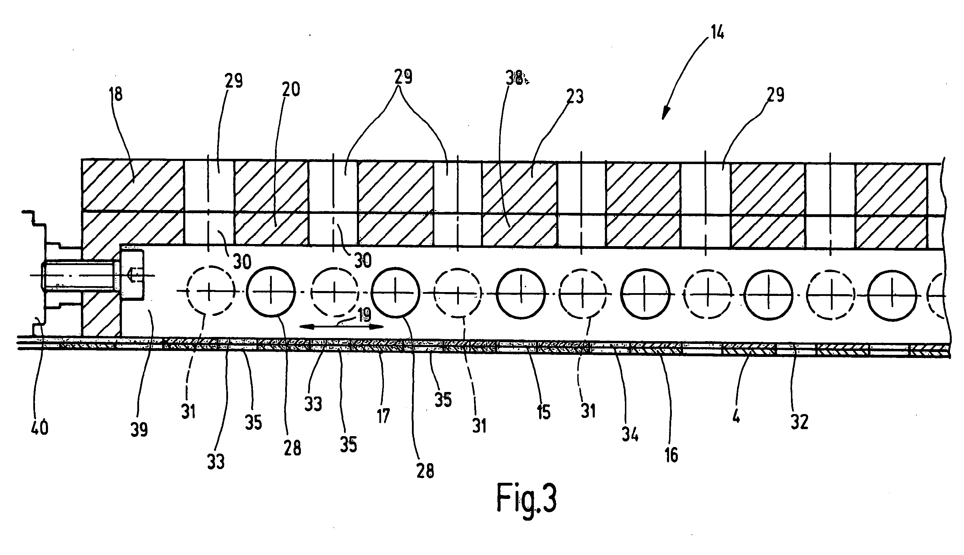

Aus den Figuren 1 und 3 ist ersichtlich, dass an der Unterseite 34 des Lochbleches 32 das Untertrum 16 mit seiner inneren Seite 15 anliegt. Obwohl der Ventilkörper 20 beim Ausführungsbeispiel der Figur 3 etwas anders als bei den Ausführungsbeispielen der Figuren 2, 4 und 5 ausgebildet ist, ergibt sich eine gleichwirkende Funktion. Auf die genannten Unterschiede wird nachstehend noch kurz eingegangen.

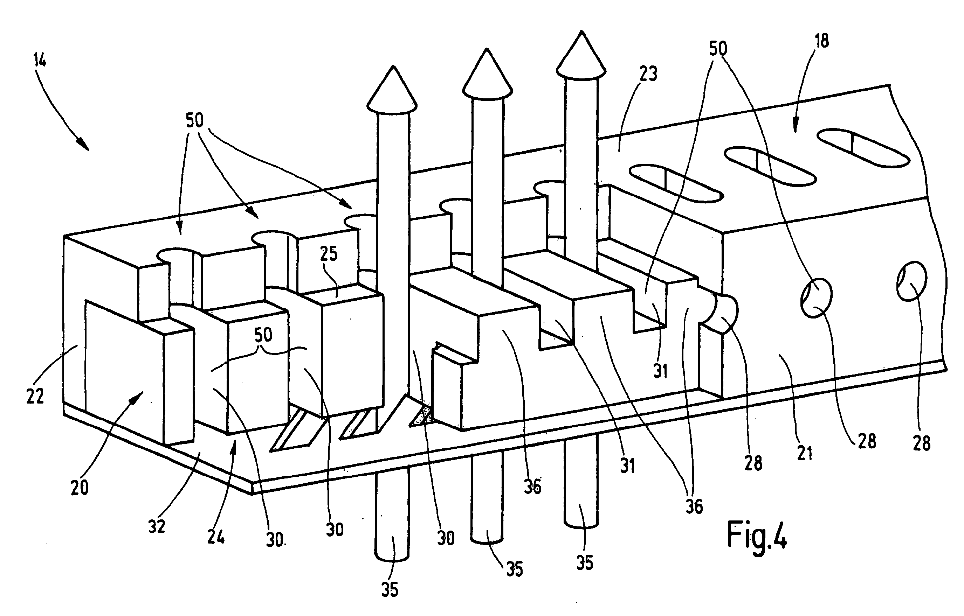

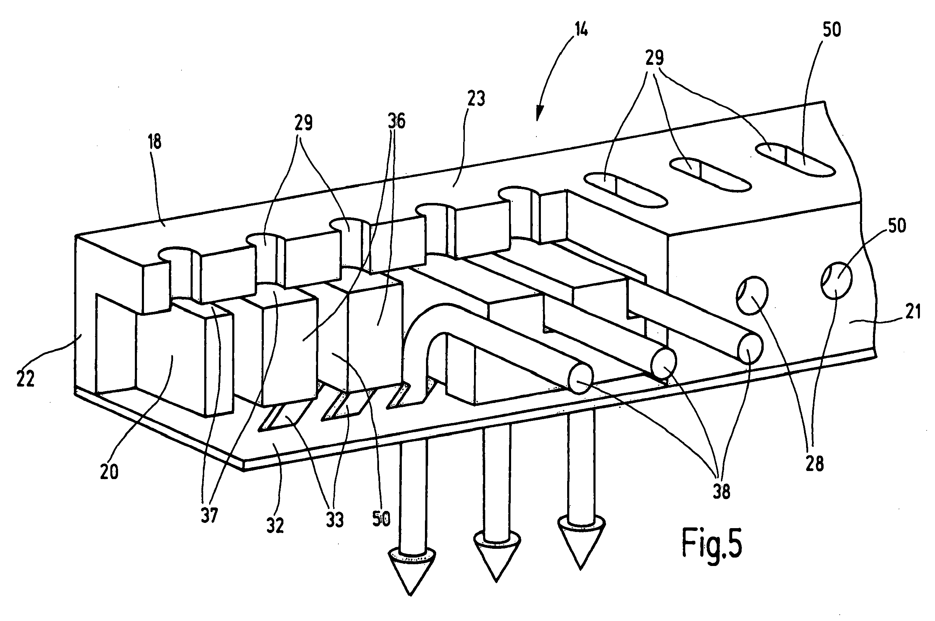

Zunächst soll die Funktion der Transportvorrichtung 1 näher erläutert werden. Wie erwähnt, wird eine Blechtafel 3 in Überkopfstellung mittels einer nicht dargestellten weiteren Transportvorrichtung zur Transportvorrichtung 1 geliefert. Gemäß Pfeil 10 weist die Vakuumkammer 8 einen Unterdruck auf. Der Ventilkörper 20 des Schaltventils 14 befindet sich in der aus der Figur 4 hervorgehenden Stellung. Dies bedeutet, dass die Saugkanäle 30 mit den Vakuumdurchbrüchen 29 fluchten und in sofern eine Verbindung vom Innern der Vakuumkammer 8 bis zum Lochblech 32 und durch dessen Durchbrüche 33 hindurch bis zu den Löchern 35 im Lochriementrum 4 (Figur 3) geschaffen ist. Gemäß der Pfeile 35 der Figur 4 erfolgt somit eine Saugwirkung mit der Folge, dass die Blechtafeln 3 an der äußeren Seite 17 des Untertrums 16 festgesaugt wird. Da sich das Trum gemäß Pfeil 7 bewegt, wird die Blechtafel 3 bis in die aus der Figur 1 hervorgehenden Stellung bewegt, das heißt, sie befindet sich innerhalb der Haltezone H. Das Abwerfen der Blechtafel 3 kann entweder beim Stillstand des Lochriementrums 4, bei dessen Verlangsamung oder auch bei dessen voller Geschwindigkeit erfolgen. Dies ist frei wählbar. Die Erfindung ist von besonderer Bedeutung für den Stillstandsfall, da der Abwurf der Tafel dann sehr exakt erfolgen kann und ferner nach dem Abwurf wieder eine Beschleunigung des Lochriementrums herbeigeführt werden muss. Dieses Vorgehen erfordert entsprechende Zeiten, sodass die Zeit für den Abbau und den Aufbau des Vakuums sehr kurz sein muss, um hohe Stückzahlen pro Zeiteinheit erreichen zu können. Aufgrund der erfindungsgemäßen Aufteilung in viele Einzelquerschnitte können erfindungsgemäß hohe Luftvolumina innerhalb kürzester Zeit beherrscht werden, sodass extrem kurze Reaktionszeiten vorliegen. Im Nachfolgenden soll davon ausgegangen werden, dass das Lochriementrum 4 bis zum Stillstand abgebremst wird, bis sich die aus der Figur 1 hervorgehende Position der Blechtafel 3 einstellt. Nunmehr wird das Schaltventil 14 geschaltet. Dies bedeutet, dass ein nicht näher dargestellter Antrieb, der beispielsweise pneumatisch, elektrisch, mechanisch oder magnetisch wirken kann, den Ventilkörper 20 in die Stellung gemäß Figur 5 verlagert. Dies hat zur Folge, dass der Verschluss der Belüftungsbohrungen 28 aufgehoben wird. Diese waren in der aus der Figur 4 hervorgehenden Stellung dadurch verschlossen, dass zwischen den einzelnen Entlüftungskanälen 31 am Ventilkörper 20 ausgebildete Stege 36 in Gegenüberlage zu den Belüftungsbohrungen 28 standen. Erfolgt die Ventilkörperverlagerung, ausgehend von der in der Figur 4 gezeigten Stellung (Saugstellung) in die aus der Figur 5 hervorgehenden Stellung (Belüftungsstellung), so korrespondieren die Belüftungskanäle 31 mit den Belüftungsbohrungen 28. Ferner stehen die Entlüftungskanäle 31 mit den Saugkanälen 30 permanent in Verbindung, sodass sich ein Entlüftungsweg zum Lochblech 32 und durch dessen Durchbrüche 33 und durch das Lochriementrum 4 hindurch einstellt. In dieser Position des Schaltventils 14 werden die Vakuumdurchbrüche 29 durch die Oberseiten 37 der Stege 36 verschlossen, sodass keine Verbindung mehr zum Innern der Vakuumkammer 8 besteht. Mithin kann Umgebungsluft gemäß der Pfeile 38 durch die Belüftungsbohrungen 28, die Entlüftungskanäle 31, die Saugkanäle 33 und die Durchbrüche 33 sowie die Löcher im Lochriementrum 4 bis zur Blechtafel 3 gelangen, sodass dort das Vakuum blitzartig abgebaut wird und die Blechtafel 3 im freien Fall abgeworfen wird. Aufgrund der beschriebenen Konstruktion ist eine hochpräzise, rekonstruierbare Abwurfmöglichkeit geschaffen, die eine saubere Stapelung der Blechtafeln 3 zulässt. Durch die Vielzahl der aus den Figuren ersichtlichen Einzelquerschnitte 50, gebildet von den Öffnungen 30, 29, 31 und 28 ist ein Öffnen beziehungsweise Schließen des Schaltventils 14 durch Betätigung vieler Teilquerschnitte möglich.

Während beim Ausführungsbeispiel der Figuren 2, 4 und 5 der Ventilkörper 20 als Vollkörper ausgebildet ist und nur von den entsprechenden Kanälen und Bohrungen durchsetzt wird, handelt es sich beim Ausführungsbeispiel der Figur 3 um einen hohlen Ventilkörper 20, der eine obere Wandung 38 und - von dieser ausgehend - vier Seitenwandungen aufweist, jedoch keine untere, parallel zur oberen Wandung 38 verlaufende Wandung besitzt. Vielmehr überspannt der so gebildete Hohlraum 39 die Durchbrüche 33 des Lochblechs 32. In der oberen Wandung 38 befinden sich Saugkanäle 30, die in der aus der Figur 3 hervorgehenden Stellung des Ventilkörpers 20 mit den Vakuumdurchbrüchen 29 korrespondieren. Insofern wird in dieser Stellung durch den Lochriemen (Untertrum 16) hindurch und auch durch die Durchbrüche 33 eine Saugwirkung aufgrund des Vakuums in der Vakuumkammer 8 aufgebaut, da der Hohlraum 39 über die Saugkanäle 30 und die Vakuumdurchbrüche 29 mit dem Inneren der Vakuumkammer 8 verbunden ist. In der Figur 3 sind mit durchgezogener Linie Entlüftungsöffnungen 28 des Ventilgehäuses 18 dargestellt und mit gestrichelter Linie Entlüftungskanäle 31 in der entsprechenden Seitenwand des Ventilkörpers 20. In der Figur 3 weisen Belüftungsbohrungen 28 und Entlüftungskanäle 31, aufgrund der dargestellten Schaltstellung des Schaltventils 14, einen Versatz zueinander auf, sodass ein Verschluss besteht, das heißt, die Umgebungsluft ist nicht mit dem Hohlraum 39 verbunden. Wird mittels des aus der Figur 3 hervorgehenden Antriebs 40 der Ventilkörper 20 gemäß Doppelpfeil 19 um eine Teilung verschoben, so korrespondieren die Belüftungsbohrungen 38 mit den Entlüftungskanälen 31 unter gleichzeitigem Verschluss der Saugkanäle 30, wodurch die Belüftung des Hohlraums 39 erfolgt und demzufolge die Blechtafel 3 abgeworfen wird.

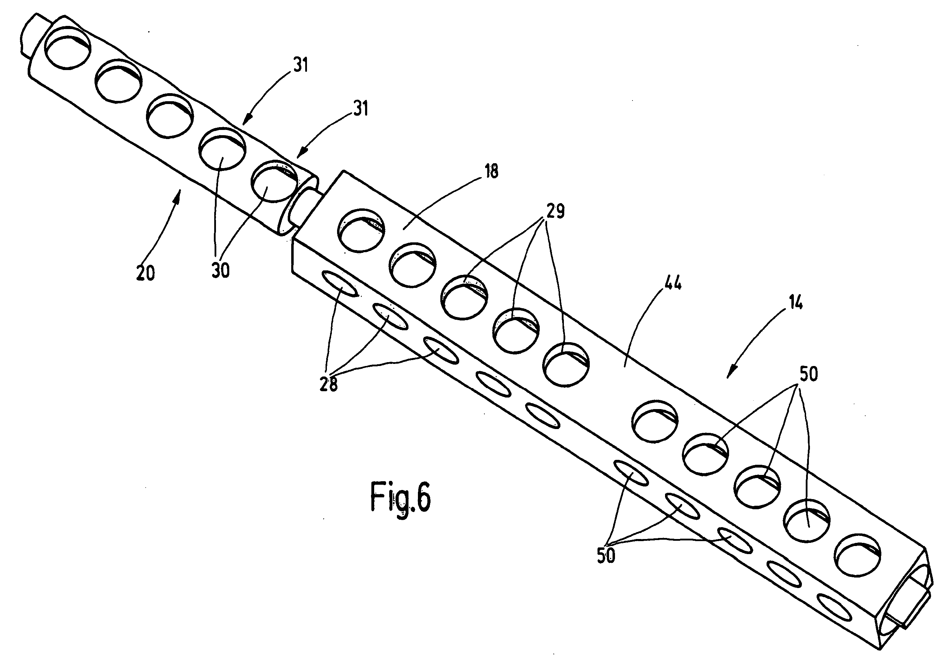

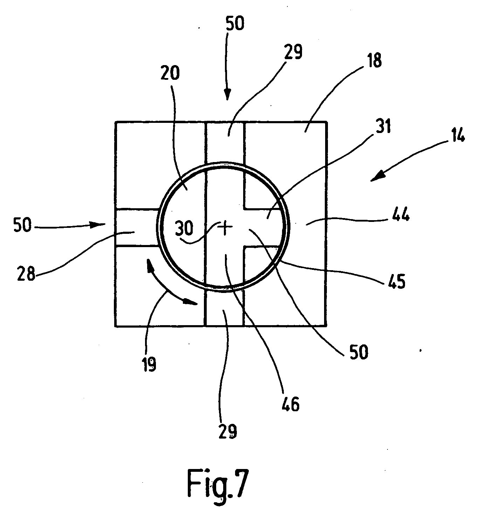

Die Figuren 6 und 7 zeigen ein weiteres Ausführungsbeispiel eines Schaltventils 14, das bei einer Transportvorrichtung 1 eingesetzt werden kann. Im Folgenden wird jedoch nur auf das Schaltventil 14 näher eingegangen, im Übrigen wird auf die vorstehenden Ausführungen zu den zuvor geschriebenen Ausführungsbeispielen verwiesen. Beim Ausführungsbeispiel der Figuren 6 und 7 ist das Ventilgehäuse 18 als Massivkörper 44 stabförmig ausgebildet. Es wird - gemäß Figur 7 - durchsetzt von Vakuumdurchbrüchen 29, die fluchtend von einander gegenüberliegenden Seiten des Massivkörpers 44 ausgehen und jeweils bis zu einer Längsbohrung 45 reichen. Um 90° dazu versetzt verläuft jeweils eine Belüftungsbohrung 28 im Massivköper 44. Im Innern der Längsbohrung 45 befindet sich der Ventilkörper 20, der stabförmig mit kreisförmigem Querschnitt ausgebildet ist. Er besitzt eine entsprechende Vielzahl von T-förmigen Kanälen 46. Bei jedem Kanal 46 bildet ein Teilstück einen Saugkanal 30 und ein weiteres Teilstück einen Entlüftungskanal 31. In der in der Figur 7 dargestellten Stellung des Ventilkörpers 20 relativ zum Ventilgehäuse 18 sind die beiden Vakuumdurchbrüche 29 mittels des Saugkanals 30 miteinander verbunden, während der Entlüftungskanal 31 verschlossen ist. Wird der Ventilkörper 20 um 90° gedreht (Doppelpfeil 19), so wird mittels eines Teilstückes des Saugkanals 30 eine Verbindung zur nach außen führenden Belüftungsbohrung 28 hergestellt und der Entlüftungskanal 31 ist mit dem unteren Teil des Vakuumdurchbruchs 29 verbunden. Der obere Teil des Vakuumdurchbruchs 29 ist verschlossen, ebenso der verbleibende Bereich des Saugkanals 30. Dementsprechend wird eine Verbindung von dem Vakuumdurchbruch 29 zur Belüftungsbohrung 28 hergestellt. Dies entspricht der Belüftungsstellung des Schaltventils, während die aus der Figur 7 hervorgehende Stellung die Saugstellung repräsentiert. Ein Vergleich der Figuren 7 und 6 ergibt, dass eine Vielzahl von entsprechenden Bohrungen und Kanälen über die Längserstreckung des Schaltventils 14 vorgesehen ist, sodass - wie auch bei den zuvor beschriebenen Ausführungsbeispielen - eine Vielzahl von Einzelquerschnitten vorliegt, die in Saugstellungen beziehungsweise Belüftungsstellungen verbracht werden können, um auf diese Art und Weise jeweils einen großen Gesamtschaltquerschnitt des Schaltventils 14 zu bilden.

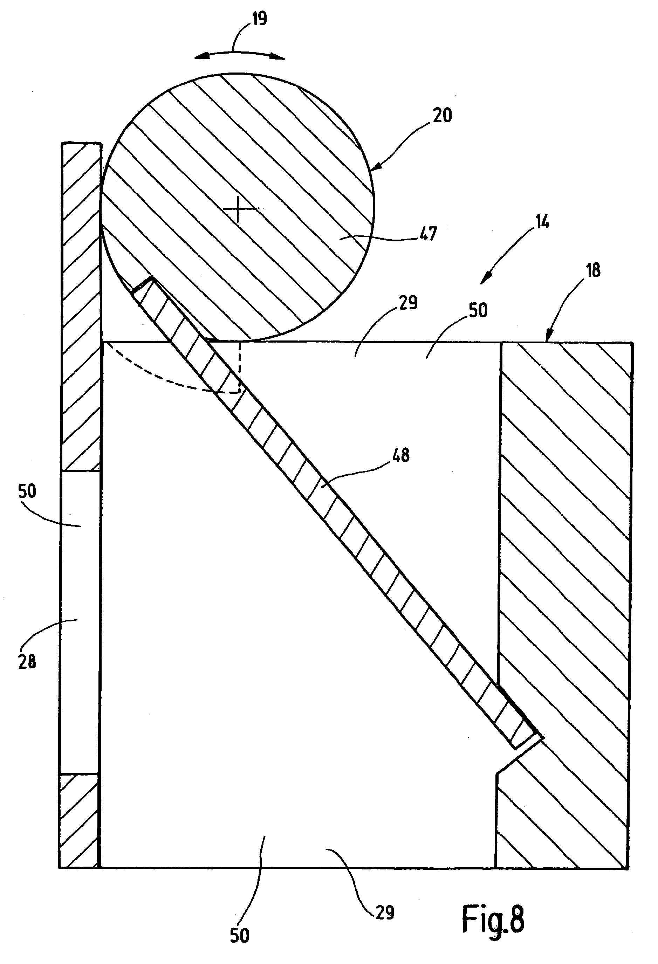

Schließlich zeigt die Figur 8 ein weiteres Ausführungsbeispiel. Hier wird nur ein Element dargestellt. Über die Länge des Schaltventils 14 sind eine Vielzahl derartiger Elemente mit entsprechenden Kanälen und Bohrungen vorgesehen, um die Vielzahl der Einzelquerschnitte 50 zu schaffen. Das Ventilgehäuse 18 besitzt im unteren Bereich einen Vakuumdurchbruch 29, der verbunden ist mit einer Belüftungsbohrung 28 (gemäß Stellung in Figur 8). Der Ventilkörper 20 weist eine Welle 47 auf, an der eine Verschlussklappe 48 lagert. In der aus der Figur 8 hervorgehenden Stellung (Belüftungsstellung) ist aufgrund der Stellung der Verschlussklappe 48 der Vakuumdurchbruch 29 mit der Belüftungsbohrung 28 verbunden. Wird die Welle 47, gemäß Doppelpfeil 19, derart verdreht, dass die Verschlussklappe 48 die Belüftungsbohrung 28 verschließt, so besteht durch das Ventilgehäuse 18 hindurch eine Verbindung von dem Vakuumdurchbruch 29 (unterer Bereich) zum Vakuumdurchbruch 29 (oberer Bereich), und von dort aus zum Inneren der Vakuumkammer 8, sodass ein entsprechender Unterdruck zum Halten einer Blechtafel aufgebaut werden kann.

Gemäß der vorstehenden Ausführungen handelt es sich bei der Erfindung somit um eine Transportvorrichtung, die eine Saugriemenstrecke mit direkt integriertem Schaltventil aufweist. Im Schaltventil ist ein Schieber, Drehelement oder dergleichen als Ventilkörper direkt integriert, um das Vakuum im richtigen Moment abzuschalten, wenn die Blechtafel ihr Lageziel oberhalb eines Stapelorts, beispielsweise eines Ventilschachtes erreicht hat. Die Vorteile der erfindungsgemäßen Ausbildung sind ein besonders schnelles Abschalten des Unterdrucks, da die Luft für die Be- und Entlüftung des Saugkanals nur sehr kurze Strecken zurücklegen muss. Der Verlauf des Unterdruckniveaus unterhalb der Riemenstrecke ist besonders gleichmäßig, da die Luftströmung auf viele Einzelquerschnitte verteilt wird. Der Schaltpegel bei dem Schalten des Schaltventils ist extrem niedrig (wesentlich niedriger als bei den bekannten Ventilen, die ein zentrales Vakuumventil aufweisen, welches alle Riemenspuren versorgt und nur einen großen Schaltquerschnitt besitzt). Bei der Erfindung wird die Luftströmung auf viele Einzelquerschnitte verteilt. Der Schieber (Ventilkörper) unterliegt kaum einem Verschleiß, da nur sehr kurze Hübe (ca. 10 mm) auszuführen sind. Mit dem erfindungsgemäßen Vakuumsystem können beispielsweise Blechtafeln, insbesondere Aluminiumblechtafeln oder Weißblechtafeln, problemlos gehalten, transportiert und abgeworfen werden. Es kommt nicht auf eine magnetische Wirkung an, sondern es wird eine Unterdruckwirkung entfaltet, sodass auch nicht magnetische Werkstoffen gehalten werden können.

Das erfindungsgemäße Verfahren zeichnet sich insbesondere dadurch aus, dass zunächst die Blechtafeln überkopf antransportiert werden. Der Antransport jeder Blechtafel erfolgt mittels des Überkopftrums bis zum Stillstand. Bis hierhin wird die jeweilige Blechtafel durch den Unterdruck am Trum gehalten. Nunmehr kann durch das erfindungsgemäße Vorgehen in sehr kurzer Zeit das Vakuum abgebaut werden und die Blechtafel reproduzierbar exakt abgelegt werden. Aufgrund der erfindungsgemäßen Maßnahmen ist es anschließend sehr schnell möglich, das Vakuum wieder aufzubauen und das Trum wieder zu beschleunigen. Demzufolge kann in einer sehr kurzen Taktzeit die nächste Blechtafel antransportiert und wiederum exakt -wie zuvor beschrieben- abgeworfen werden.

## Patentansprüche

1. Transportvorrichtung für Gegenstände, insbesondere Flachgüter, wie Blechtafeln oder dergleichen, mit einer schaltbaren Unterdruckeinrichtung zum Halten der Güter, insbesondere in Überkopfposition, in einer Haltezone der Transportvorrichtung, und mit einem Schaltventil zum Auf- und Abbau des Unterdrucks, **dadurch gekennzeichnet, dass** sich der Schaltquerschnitt des Schaltventils (14) aus einer Vielzahl in Saug- beziehungsweise Belüftungsstellungen bringbaren, einer einzigen Vakuumkammer zugeordneten Einzelquerschnitten (50) zusammensetzt, sodass zum Halten der Unterdruck über die Vielzahl von schaltbaren Einzelquerschnitten auf den Gegenstand einwirkt und zum Loslassen des Gegenstands eine oder die Vielzahl von schaltbaren Einzelquerschnitten belüftet werden.

2. Transportvorrichtung nach Anspruch 1, **dadurch gekennzeichnet, dass** sich das Schaltventil (14) in unmittelbarer Nähe der Haltezone (H) befindet.

3. Transportvorrichtung nach einem der vorhergehenden Ansprüche, **dadurch gekennzeichnet, dass** die Einzelquerschnitte (50) über die Haltezone (H) verteilt angeordnet sind.

4. Transportvorrichtung nach einem der vorhergehenden Ansprüche, **dadurch gekennzeichnet, dass** das Schaltventil (14) mindestens einen beweglichen Ventilkörper (20) aufweist, der mittels eines Antriebs (40) in die Saug- beziehungsweise Belüftungsstellung bringbar ist.

5. Transportvorrichtung nach einem der vorhergehenden Ansprüche, **dadurch gekennzeichnet, dass** der Antrieb (40) ein pneumatischer, elektrischer oder magnetischer Antrieb (40) ist.

6. Transportvorrichtung nach einem der vorhergehenden Ansprüche, **dadurch gekennzeichnet, dass** der Ventilkörper (20) von mehreren Saugkanälen (30) durchsetzt ist.

7. Transportvorrichtung nach einem der vorhergehenden Ansprüche, **dadurch gekennzeichnet, dass** der Ventilkörper (20) von mehreren Entlüftungskanälen (31) durchsetzt ist.

8. Transportvorrichtung nach einem der vorhergehenden Ansprüche, **gekennzeichnet durch** die Vakuumkammer (8) mit mehreren Wandungen (11, 12, 13), von denen mindestens eine Wandung (13) das Schaltventil (14) aufweist oder von denen mindestens eine Wandung (13) von dem Schaltventil (14) gebildet ist.

9. Transportvorrichtung nach einem der vorhergehenden Ansprüche, **dadurch gekennzeichnet, dass** das Schaltventil (14) unmittelbar an ein Transportmittel (4) der Transportvorrichtung (1) angrenzt.

10. Transportvorrichtung nach einem der vorhergehenden Ansprüche, **dadurch gekennzeichnet, dass** das Transportmittel mindestens ein Lochriementrum (4) ist.

11. Verfahren zum mittels Unterdruck erfolgenden Halten und Loslassen von Gegenständen, insbesondere Flachgütern, wie Blechtafeln oder dergleichen, an einem Transportmittel, **gekennzeichnet durch** die Schritte:
- Vorsehen einer Transportvorrichtung nach einem der Ansprüche 1 bis 10
- wobei zum Halten der Unterdruck einer einzigen Vakuumkammer über eine Vielzahl von schaltbaren Einzelquerschnitten auf den Gegenstand einwirkt
- und wobei zum Loslassen eine oder die Vielzahl von schaltbaren Einzelquerschnitten belüftet werden.

12. Verfahren nach Anspruch 11, **dadurch gekennzeichnet, dass** die Gegenstände in Überkopfposition transportiert werden.

13. Verfahren nach einem der vorhergehenden Ansprüche, **dadurch gekennzeichnet, dass** jeder Gegenstand - gehalten vom Unterdruck- bis zum Stillstand abgebremst und im Stillstandszustand das Vakuum zum Abwerfen des Gegenstandes abgebaut wird.

14. Verfahren nach einem der vorhergehenden Ansprüche, **dadurch gekennzeichnet, dass** nach dem Abwurf des Gegenstandes das Vakuum wieder aufgebaut und gleichzeitig das Transportmittel wieder beschleunigt wird.

## Claims

1. A transportation device for objects, in particular flat goods such as sheet metal panels or the like, having a switchable negative pressure device for retaining the goods, in particular in an overhead position, in a retaining zone of the transportation device, and having a switching valve for building up and relieving the negative pressure, **characterized in that** the flow cross section of the switching valve (14) is composed of a plurality of individual cross sections (50) adapted to be brought into suction or ventilation positions and associated with just one vacuum chamber, so that retaining is realized by the negative pressure acting onto the object via the plurality of switchable individual cross sections, and releasing the object is realized by venting one or the plurality of switchable individual cross sections.

2. A transportation device according to claim 1, **characterized in that** the switching valve (14) is located in close vicinity to the retaining zone (H).

3. A transportation device according to any one of the preceding claims, **characterized in that** the individual cross sections (50) are arranged distributed over the retaining zone (H).

4. A transportation device according to any one of the preceding claims, **characterized in that** the switching valve (14) has at least one displaceable valve body (20) adapted to be brought into the suction or venting position by means of a drive (40).

5. A transportation device according to any one of the preceding claims, **characterized in that** the drive (40) is a pneumatic, an electric or a magnetic drive (40).

6. A transportation device according to any one of the preceding claims, **characterized in that** the valve body (20) is interspersed with multiple suction channels (30).

7. A transportation device according to any one of the preceding claims, **characterized in that** the valve body (20) is interspersed with multiple venting channels (31).

8. A transportation device according to any one of the preceding claims, **characterized by** the vacuum chamber (8) with multiple walls (11, 12, 13), with at least one of said walls (13) comprising the switching valve (14), or with at least one of said walls (13) being constituted by the switching valve (14).

9. A transportation device according to any one of the preceding claims, **characterized in that** the switching valve (14) immediately adjoins a means of transportation (4) of the transportation device (1).

10. A transportation device according to any one of the preceding claims, **characterized in that** the means of transportation is at least one free part of a perforated belt (4).

11. A method using a negative pressure for retaining and releasing objects, in particular flat goods, such as sheet metal panels or the like, on a means of transportation, **characterized by** the following steps:
- providing a transportation means according to any one of the claims 1 to 10;
- wherein retaining is realized by the negative pressure of just one vacuum chamber acting onto the object via a plurality of switchable individual cross sections;
- and wherein releasing is realized by venting one or the plurality of switchable individual cross sections.

12. A method according to claim 11, **characterized in that** the objects are transported in an overhead position.

13. A method according to any one of the preceding claims, **characterized in that** each object - retained by the negative pressure - is decelerated to a standstill, and that the vacuum is reduced in the standstill condition for discharging the object.

14. A method according to any one of the preceding claims, **characterized in that** once the object is discharged, the vacuum is built up again, and at the same time the transportation means is accelerated again.

## Revendications

1. Dispositif de transport pour des objets, en particulier des matériaux plats tels que les feuilles de tôle ou similaire, avec un dispositif de dépression commandable pour retenir les objets, notamment dans une position au-dessus de la tête, dans une zone de retenue du dispositif de transport, et avec une soupape de commande pour établir et réduire la dépression, **caractérisé en ce que** la section transversale d'écoulement de la soupape de commande (14) se compose d'une pluralité de sections transversales individuelles (50) susceptibles d'être mises dans des positions d'absorption ou ventilation, et associées à une seule chambre de vide, de sorte que, pour retenir l'objet, la dépression agit sur l'objet via la pluralité de sections transversales individuelles commandables, et pour libérer l'objet, une ou la pluralité de sections transversales individuelles commandables est ventilée.

2. Dispositif de transport selon la revendication 1, **caractérisé en ce que** la soupape de commande (14) se trouve à proximité immédiate de la zone de retenue (H).

3. Dispositif de transport selon l'une des revendications précédentes, **caractérisé en ce que** les sections transversales individuelles (50) sont bien reparties sur l'ensemble de la zone de retenue (H).

4. Dispositif de transport selon l'une des revendications précédentes, **caractérisé en ce que** la soupape de commande (14) a au moins un corps de soupape mobile (20) susceptible d'être mis dans la position d'absorption ou ventilation au moyen d'un entraînement (40).

5. Dispositif de transport selon l'une des revendications précédentes, **caractérisé en ce que** l'entraînement (40) est un entraînement pneumatique, éléctrique ou magnétique (40).

6. Dispositif de transport selon l'une des revendications précédentes, **caractérisé en ce que** le corps de soupape (20) est percé de plusieurs canaux d'absorption (30).

7. Dispositif de transport selon l'une des revendications précédentes, **caractérisé en ce que** le corps de soupape (20) est percé de plusieurs canaux de ventilation (31).

8. Dispositif de transport selon l'une des revendications précédentes, **caractérisé par** la chambre de vide (8) avec plusieurs parois (11, 12, 13) dont au moins une paroi (13) comporte la soupape de commande (14), ou dont au moins une paroi (13) est formé par la soupape de commande (14).

9. Dispositif de transport selon l'une des revendications précédentes, **caractérisé en ce que** la soupape de commande (14) est immédiatement adjacente à un moyen de transport (4) du dispositif de transport (1).

10. Dispositif de transport selon l'une des revendications précédentes, **caractérisé en ce que** le moyen de transport est au moins un brin de courroie perforée (4).

11. Procédure pour retenir et libérer sous l'action d'une dépression des objets, en particulier des matériaux plats tels que les feuilles de tôle ou similaire, sur un moyen de transport, **caractérisée par** les étapes suivantes :
- prévoir un dispositif de transport selon l'une des revendications 1 à 10;
- dans lequel, pour retenir l'objet, la dépression d'une seule chambre de vide agit sur l'objet via une pluralité de sections transversales individuelles commandables ;
- et dans lequel, pour libérer l'objet, une ou la pluralité de sections transversales individuelles commandables est ventilée.

12. Procédure selon la revendication 11, **caractérisée en ce que** les objets sont transportés dans une position au-dessus de la tête.

13. Procédure selon l'une des revendications précédentes, **caractérisée en ce que** chaque objet, retenu par la dépression, est freiné jusqu'à l'arrêt complet, et que, dans la situation de l'arrêt complet, le vide est réduit pour décharger l'objet.

14. Procédure selon l'une des revendications précédentes, **caractérisée en ce qu'**après le déchargement de l'objet, le vide est rétabli, et en même temps, le moyen de transport est réaccéléré.
